# EUROPÄISCHE PATENTANMELDUNG

(11) **EP 2 045 064 A1**
(43) Veröffentlichungstag der Anmeldung: **08.04.2009**
(21) Anmeldenummer: 07019237.2
(22) Anmeldetag: 01.10.2007
(51) Int. Cl.: B29C 45/50

(54) **Spritzgießmaschine**

(71) Anmelder: SIEMENS AKTIENGESELLSCHAFT, 80333 München (DE)
(72) Erfinder: Eckel, Ulrich, 91341 Röttenbach (DE); Georg, Klaus, 97616 Salz (DE); Matscheko, Gerhard, 82319 Starnberg (DE); Pengler, Georg, 81476 München (DE)

(57) **Zusammenfassung**

Bei einer erfindungsgemäßen Spritzgießmaschine 1 sind die Permanentmagnete 7 auf eine Planetenroll- oder Kugelrollspindel bzw. auf die Spindelmutter 5 der Spritzgießmaschine 1 aufgebracht.

## Beschreibung

Bei elektrischen Spritzgießmaschinen kommen häufig Torquemotoren (getriebeloser Direktantrieb mit hohem Drehmoment) mit Hohlwelle zum Einsatz.

Hierbei weisen die Motorläufer zwangsläufig große Massenträgheitsmomente auf. Bei elektrischen Spritzgießmaschinen ist neben einer "hochauflösenden" Zykluszeit für die Produktion auch für den technologischen Prozess ein hochdynamischer Antrieb zwingend erforderlich, um Teile sauber fertigen zu können.

In den elektrischen Spritzgießmaschinen wird heute nach dem Stand der Technik die geforderte hohe Dynamik durch die Installation von großen Antriebsleistungen realisiert. Dadurch kommt es zum Beispiel an der Einspritzachse zu der Situation, dass zum Erreichen der Beschleunigungszeiten die installierte elektrische Leistung bzw. das zur Verfügung gestellte Drehmoment überwiegend (>90%) für die Beschleunigung des rotierenden Motorläuferteiles aufgewendet wird.

Insbesondere bei Hohlwellenmotoren wirkt sich die Massenträgheit der Motoren beziehungsweise Spindeln aus. Beim Beschleunigen der Achsen ist teilweise mehr Energie in die Rotation der Motoren-Spindel-Kombination zu stecken, als in die lineare Bewegung der Achse selbst. Dies ist speziell bei der Einspritzachse von großer Bedeutung. Hier haben elektrische Maschinen immer noch nicht die Geschwindigkeiten und Beschleunigungen hydraulischer Lösungen erreicht.

Eine Aufgabe der vorliegenden Erfindung ist daher die Reduzierung der Massenträgheitsmomente im Antriebsstrang, d.h. der rotierenden Motorteile und/oder der rotierenden Teile der Spritzgießmaschine, so dass insbesondere auch dünnwandige Teile problemlos gespritzt werden können bei im Vergleich zum Stand der Technik reduzierter installierter Antriebsleistung bzw. reduziertem zur Verfügung gestellten Drehmoment.

Zur Reduzierung des Massenträgheitsmomentes im Antriebsstrang der Spritzgießmaschine wird vorgeschlagen, die notwendigen Permanentmagnete (die ursprünglich im Stand der Technik dem Motorläufer zugeordnet sind) und die mechanisch notwendige Planetenroll- oder Kugelrollspindel als eine integrierte kompakte, mechatronische Baugruppe auszuführen.

Durch das direkte Aufbringen der Permanentmagnete auf die derart modifizierten Spindeln der Spritzgießmaschine reduziert man sowohl die Massen, als auch den Durchmesser der rotierenden Teile. Die damit erreichbaren Beschleunigungswerte wachsen dann quadratisch relativ zum (reduzierten) Radius des Motorläufers (der ja nun keine Permanentmagnete mehr enthalten muss). Die Permanentmagnete können dabei auf die Planetenroll- oder Kugelrollspindel oder auf einer Spindelmutter aufgebracht sein.

Im Vergleich zum Stand der Technik kann am Torquemotor dann die Hohlwelle entfallen. Die Permanentmagnete (vorher verbaut auf der Hohlwelle) bilden auf der Spindel, bzw. auf der Spindelmutter den magnetischen Kreis. Es entsteht ein Torque/Spindelmotor für Spritzgießmaschinen.

Somit erreicht man bei einer Anwendung der erfindungsgemäßen Idee bei der elektrischen Spitzgießmaschine Beschleunigungswerte, mit denen selbst dünnwandige Teile problemlos gespritzt werden können, ohne dass beim Eintritt des flüssigen Kunststoffes in die kalte Form der Kunststoff erstarrt.

So führt die Erfindung auf eine Spritzgießmaschine, bei welcher Permanentmagnete auf eine Planetenroll- oder Kugelrollspindel der Spritzgießmaschine oder auf der Spindelmutter aufgebracht sind. Dadurch ergibt sich der besondere Effekt, dass bei im Vergleich zu Spritzgießmaschinen aus dem Stand der Technik geringerer installierter Antriebsleistung der Spritzgießmaschine dennoch die gleichen oder sogar besseren Beschleunigungswerte erreicht werden, die erforderlich sind, um insbesondere die genannten dünnwandigen Teile problemlos spritzen zu können.

Unabhängig vom technischen Gebiet des Spritzgießens sind aus dem Stand der Technik Servomotoren bekannt, deren Permanentmagnete auf die rotierende Spindelmutter aufgeklebt sind. Jedoch ist hierzu bisher nur bekannt, durch diese Maßnahme die Lastverteilung zu verbessern und eine größere Lebensdauer zu erreichen. Derartige Motoren sind ferner nur für Leistungsklassen bekannt, die für den Einsatz bei Spritzgießmaschinen als uninteressant / technisch nicht brauchbar erscheinen, da hier wie eingangs erwähnt üblicherweise deutlich höhere Antriebsleistungen gefordert sind. Die Erkenntnis, dass mit der Integration der Permanentmagneten in die Planetenroll- oder Kugelrollspindel bzw. in die Spindelmutter der Spritzgießmaschine die erforderliche Antriebsleistung reduziert werden kann und erst dann auch leistungsmäßig kleinere Motoren überhaupt in Frage kommen, ist bereits Teil der erfindungsgemäßen Erkenntnis und nicht dem Stand der Technik zuzuordnen.

Die im Stand der Technik bei Spritzgießmaschinen üblicherweise installierten großen elektrischen Leistungen können durch das erfindungsgemäße Verringern der Massenträgheit nun deutlich reduziert werden. Somit hat man an Spritzgießmaschinen einen enormen Vorteil bei der technologisch geforderten Dynamik. Durch die nunmehr ausreichende reduzierte Antriebsleistung ergeben sich auch geringere Investitionskosten für die Spritzgießmaschine. Diese kann z.B. nun kleiner ausgeführt werden. Auch ist ein Motoraustausch, beispielsweise bei einer Reparatur, nun leichter, da der Motor deutlich kleiner ausfallen kann. Ferner ist es üblicherweise auch einfacher und kostengünstiger, kleinere Motoren mit einem Gebersystem auszurüsten.

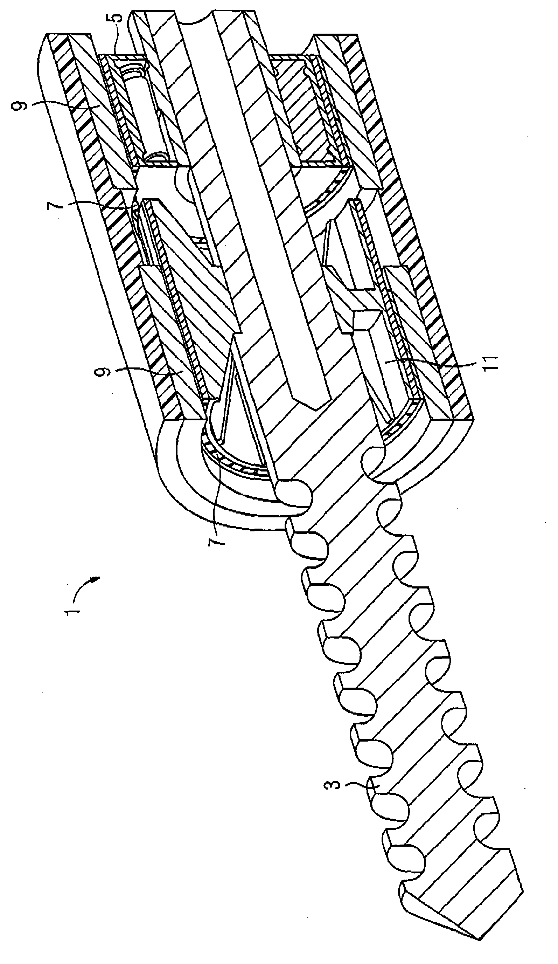

In der Figur ist ein Ausführungsbeispiel der Erfindung näher dargestellt.

Es zeigt:
- FIG: wesentliche Komponenten einer erfindungsgemäßen Spritzgießmaschine.

In der Figur sind wesentliche Antriebskomponenten einer erfindungsgemäßen Spritzgießmaschine 1 dargestellt.

Die Spritzgießmaschine umfasst eine Schnecke 3, eine Planetenmutter 5 sowie einen Plastifizierrotor 11.

Permanentmagnete 7 sind hierbei direkt auf einen Außenumfang der Planenmutter 5 aufgebracht. Des Weiteren umfasst der Plastifizierrotor 11 hier ebenfalls Permanentmagnete 7, die an einem Außenumfang dieses Rotors 11 aufgebracht sind.

Ein Stator 7 der Spritzgießmaschine umgibt die Planetenmutter 5 sowie den Plastifizierrotor 11. Der Stator 7 kann hierbei in zwei Abschnitte geteilt sein und eine Lücke zwischen dem Plastifizierrotor 11 sowie der Planetenmutter 5 aufweisen.

Durch diese Maßnahmen weist eine erfindungsgemäße Spritzgießmaschine eine im Vergleich zum Stand der Technik deutlich reduzierte Massenträgheit auf. Die Dynamik des Antriebs ist verbessert, und nun kommen auch leistungsmäßig vergleichsweise kleiner ausgelegte Motoren für einen erfindungsgemäßen Einsatz in Betracht.

## Patentansprüche

1. Spritzgießmaschine (1), bei welcher Permanentmagnete (7) auf eine Planetenroll- oder Kugelrollspindel (5) der Spritzgießmaschine aufgebracht sind.

2. Spritzgießmaschine (1) nach Anspruch 1, wobei die Planetenroll- bzw. Kugelrollspindel eine Spindelmutter (5) umfasst und die Permanentmagnete (7) auf der Spindelmutter (5) aufgebracht sind.
